Europäisches Patentamt

European Patent Office

Office européen des brevets

(11) Veröffentlichungsnummer: **0 079 458**
**B1**

(12) **EUROPÄISCHE PATENTSCHRIFT**

(45) Veröffentlichungstag der Patentschrift:
12.06.85

(51) Int. Cl.⁴: **C 01 G 25/00, C 01 G 25/02,**
**C 04 B 35/48**

(21) Anmeldenummer: 82109278.0

(22) Anmeldetag: 07.10.82

(54) **Verfahren zur Herstellung von basischem Zirkoniumkarbonat.**

(30) Priorität: 05.11.81 DE 3143921

(43) Veröffentlichungstag der Anmeldung:
25.05.83 Patentblatt 83/21

(45) Bekanntmachung des Hinweises auf die Patenterteilung:
12.06.85 Patentblatt 85/24

(84) Benannte Vertragsstaaten:
AT BE CH DE FR GB IT LI LU NL SE

(56) Entgegenhaltungen:
DE - C - 2 854 200
DE - C - 2 927 128
FR - A - 2 123 064
FR - A - 2 264 780

KERAMISCHE ZEITSCHRIFT, Band 33, Nr. 2, 1981, P.
REYNEN et al. "Erzeugung von reinstem Zirkondioxid
durch hydrothermalen Aufschluss von Zirkon", Seiten
94-98

(73) Patentinhaber: **DYNAMIT NOBEL
AKTIENGESELLSCHAFT, Postfach 1209,
D-5210 Troisdorf, Bez. Köln (DE)**

(72) Erfinder: **Deneke, Klaus, Dr., Im Wiesengrund 54,
D-5210 Troisdorf-Spich (DE)**
Erfinder: **Schragen, Gerhard, Zur alten Fähre 29,
D-5200 Siegburg-Kaldauen (DE)**

## Beschreibung

Die Erfindung betrifft ein Verfahren zur Herstellung eines säurelöslichen und zu einem reinen hochdispersen Zirkoniumoxid kalzinierbaren basischen Zirkoniumkarbonats aus reinen Zirkoniumsalzen durch Umsetzung der festen Salze mit ammoniakalischer Lösung, Abtrennung der erhaltenen basischen Zirkoniumsalze und Überführung in das basische Zirkoniumkarbonat.

Der Einsatz von Zirkoniumoxid in Sonderkeramik stellt hohe Anforderungen an die Reinheit und Dispersität des Rohstoffes. Dies gilt in besonderem Masse, wenn die Verarbeitung zu elektronischen Bauelementen vorgesehen ist, wie Piezokeramik oder Sauerstoffmesssonden. Die Reinheitsanforderungen erstrecken sich dabei nicht nur auf metallische, sondern auch auf nichtmetallische Verunreinigungen wie z. B. Chlorid oder Sulfat. Dies ist insofern von besonderer Bedeutung, weil Salze wie das Oxichlorid $ZrOCl_2 \cdot 8H_2O$ oder das saure Sulfat $ZrOSO_4 \cdot H_2SO_4 \cdot 3H_2O$ die üblichen Ausgangsprodukte für die Herstellung anderer Zirkoniumchemikalien insbesondere auch des Oxides sind.

Beide Salze sind in der Regel das Ergebnis von Mineralaufschluss und können unter Einhaltung bestimmter Bedingungen (,,J. Am. Ceram. Soc.'', *74* [1952], 2104) durch Umkristallisieren rein gewonnen werden.

Werden diese Salze der Hochtemperaturpyrolyse unterworfen, so werden zwar hinsichtlich metallischer Verunreinigungen reine Oxide erhalten, das Verfahren ist aber mit beträchtlichen Nachteilen behaftet und liefert in der Regel ein stark verfrittetes Produkt, das aufgemahlen werden muss mit der damit einhergehenden Gefahr einer nachträglichen Kontaminierung. Zumindest im Falle des Sulfates ist diese Abröstung auch nicht in dem zu fordernden Masse vollständig. Es gehört daher zum Stand der Technik, die bekannten Salze in basisches Karbonat zu überführen, aus dem u. a. auch wieder Salze anderer Säuren gewonnen werden können, welches sich aber vor allem zu einem hochdispersen reinen Zirkoniumoxid verglühen lässt. Fällung des basischen Karbonates aus wässeriger Lösung führt zu schlecht filtrier- und waschbaren Niederschlägen, so dass schon vorgeschlagen wurde, diese Umsetzung als Slurryreaktion durchzuführen. Dazu kann z. B. das reine, saure Sulfat fest in eine Ammonkarbonatlösung eingetragen werden (,,Keram. Zeitschr.'', *33* [1981], 94) oder auch verunreinigtes Produkt zunächst durch wiederholte Umfällung als basisches Sulfat (Molverhältnis $ZrO_2:SO_3 \simeq 2:3$) gereinigt werden und dann in Suspension mit Ammonkarbonat und Kohlensäure bzw. Ammonbikarbonat umgesetzt werden (DE-C Nrn. 2854200 und 2927128). Diese Verfahrensstufe wird in der bekannten Literatur (vgl. H. Bastius, zitiert in ,,Keram. Zeitschr.'', *33* [1981], 98, Ref. 17) übereinstimmend als kritisch bezeichnet und ist Gegenstand der vorliegenden Erfindung.

Erfindungsaufgabe ist die Herstellung eines reinen, hochdispersen Zirkoniumoxids.

Die richtige Dosierung des Umfällungsagens ist von ganz entscheidender Bedeutung hinsichtlich der Erhaltung eines gut filtrier- und waschbaren Niederschlages sowie der Vermeidung von Überschuss im Hinblick auf eine ausbeutemindernde Komplexbildung (vgl. H. Bastius, a.a.O.).

Gemäss der Erfindung wird diese Aufgabe durch die im kennzeichnenden Teil von Patentanspruch 1 angegebenen Massnahmen gelöst.

Es wurde gefunden, dass sich dieses bei der heterogenen Umsetzung besonders kritische Problem dadurch lösen lässt, dass anstelle von Ammonbikarbonat bzw. der Kombination von Ammonkarbonat und Kohlensäure Harnstoff als Umfällungsagens eingesetzt wird. Zur Durchführung des vorgeschlagenen Verfahrens wird gereinigtes festes Zirkoniumsalz, z. B. saures Zirkoniumsulfat oder Zirkoniumoxichlorid, zunächst in eine warme Ammoniaklösung eingetragen und als körnige Suspension bis zum konstanten pH-Wert digeriert. Nach dieser Vorentsäurung kann der gut absitzende Feststoff leicht von der Lösung des Ammonsalzes durch Dekantieren, Filtrieren oder Zentrifugieren abgetrennt und ggf. frei von löslichem Sulfat gewaschen werden.

Wie die folgenden Beispiele zeigen, lassen sich diese nicht näher definierten basischen Salze zwar zu Oxid ausreichender Dispersität, aber noch mangelhafter Anionenfreiheit, verglühen. Die erhaltenen körnigen basischen Produkte werden daher erneut in Wasser suspendiert, mit Harnstoff versetzt und in der Lösung bei Temperaturen, die zur hydrolytischen Spaltung des Harnstoffes ausreichen, digeriert. Dabei liegen sowohl die ammoniakalische als auch die Harnstofflösung vorzugsweise in einem stöchiometrischen Überschuss bezüglich des eingesetzten Zirkoniumsulfats oder Zirkoniumoxichlorids vor.

Das filtrierte und gewaschene Produkt ist filterfeucht säurelöslich und liefert nach dem Verglühen ein lockeres, auch in bezug auf Anionen reines Oxid, dessen Dispersität durch Glühtemperatur und -zeit einstellbar ist.

Das erfindungsgemässe Verfahren wird durch die folgenden Beispiele näher erläutert.

*Beispiel 1:*

Ein technisches saures Zirkoniumsulfat des Handels wurde durch Umkristallisieren unter Anwendung einer Kombination an sich bekannter Verfahren gereinigt. Dazu wurden 710 g rohes Zirkoniumsulfat (ca. 2 mol) in die gleiche Gewichtsmenge kalten Wassers eingetragen, mit 71 g wässeriger HCl (Dichte 1,19 g/cm³) und 0,7 g Polyäthylenglycol versetzt und ca. 1 h bei 50°C verrührt. Vom Ungelösten wurde durch ein dichtes Filter filtriert und das blanke Filtrat mit 710 g konzentrierter Schwefelsäure (Dichte 1,84 g/cm³) versetzt, wobei sich die Mischung auf etwa 100°C erwärmte. Sie wurde etwa 20 bis 30 min heiss gehalten und langsam (~ 0,5°C/min) unter leichtem Rühren auf Raumtemperatur abgekühlt. Das gut kristallisierte Salz lässt sich durch Zentrifugieren einwandfrei von der Mutterlauge trennen und ist ungewaschen für die weitere Umsetzung hinreichend sauber, wie die in der folgenden Tabelle enthaltene Gegenüberstellung der Analyse von Roh- und Reinsulfat (bezogen auf $ZrO_2$-Glührückstand) zeigt:

| | $Zr(SO_4)_2 \cdot 2H_2O$ (bei 1000°C und 10 h verglüht) | |
|---|---|---|
| | Rohsalz Massenanteil (Gew.-%) | umkrist. Salz Massenanteil (Gew.-%) |
| $SiO_2$ | 0,02 | <0,01 |
| $TiO_2$ | 0,24 | <0,05 |
| $Fe_2O_3$ | 0,16 | 0,069 |
| CaO | 0,031 | 0,028 |
| $Al_2O_3$ | 0,02 | 0,02 |

Der Verlust über die Mutterlauge beträgt ca. 5 Gew.-%, bezogen auf eingesetztes Rohsulfat.

710 g gereinigtes Zirkoniumsulfat (~ 2 mol) werden dann unter kräftigem Rühren in eine Mischung aus 2 l $H_2O$ und 1 kg konz. $NH_3$-Lösung (Dichte 0,91 g/cm³) eingetragen (ca. 8,5 gew.-%ige $NH_3$-Lösung).

Die Mischung erwärmt sich auf ca. 50°C und wird etwa 90 bis 120 min bei dieser Temperatur digeriert bis zum annähernd konstanten pH-Wert von 8 bis 9. Das körnige Umsetzungsprodukt der heterogenen Reaktion setzt sich gut ab, wurde abfiltriert und einmal mit kaltem Wasser gewaschen. Dann wurde erneut in ca. 3 l $H_2O$ suspendiert, die Mischung mit 240 g Harnstoff (~ 4 mol) versetzt und bis annähernd zum Kochpunkt erhitzt und 90 bis 120 min bei dieser Temperatur digeriert. Das dichte Reaktionsprodukt liess sich hervorragend filtrieren und sulfatfrei waschen, die Umsetzung, bezogen auf eingesetztes Zirkoniumsulfat, war, als geglühtes Zirkoniumoxid bestimmt, praktisch quantitativ.

Das Ergebnis der Umsäuerung, d. h. der Austausch von Sulfat gegen Karbonat ist vollständig, wie die $SO_3$-Werte an geglühten Proben ausweisen.

Die ausschliessliche $NH_3$-Behandlung liefert dagegen ein Produkt, welches bei vergleichbarer Glühung einen wesentlich höheren Rest-$SO_3$-Gehalt aufweist. Dabei ist die Dispersität (spez. Oberfläche) der erhaltenen Glühprodukte durchaus vergleichbar.

| $NH_3$ + Harnstoffbehandlung (erfindungsgemäss) | | | $NH_3$-Behandlung (Vergleich) | | |
|---|---|---|---|---|---|
| Glühung (°C/3 h) | $SO_3$ (Gew.-%) | spez. Oberfläche ($g^{-1} \cdot m^2$) | Glühung (°C/3 h) | $SO_3$ (Gew.-%) | spez. Oberfläche ($g^{-1} \cdot m^2$) |
| 600 | 0,033 | 22,2 | — | — | — |
| 800 | 0,035 | 9,4 | 800 | 0,80 | 8,9 |
| 1000 | 0,030 | 2,9 | 1000 | 0,15 | 3,5 |

*Beispiel 2:*

Mit einem durch Umkristallisieren aus 8N-HCl gereinigten Zirkoniumoxichlorid wurde eine entsprechende Umsetzung wie in Beispiel 1 durchgeführt, d. h. Dispergieren des festen Salzes in $NH_3$-Lösung und anschliessend in heisser Harnstofflösung. Der Chloridaustausch wurde nach beiden Verfahrensstufen durch Glühen der jeweiligen Produkte (700°C und 3 h) und Bestimmung des Rest-Cl im Zirkoniumoxid zu 0,02 Gew.-% ($NH_3$-Behandlung) und < 0,005 Gew.-% (erfindungsgemässe $NH_3$- + Harnstoffbehandlung) verfolgt. Die Produktdispersität war wieder annähernd gleich: 11,6 bzw. 16,7 m²/g resp.

Karbonisierung in einer Harnstofflösung unter deren hydrolytischer Zersetzung durchgeführt wird.

2. Verfahren nach Anspruch 1, dadurch gekennzeichnet, dass sowohl die ammoniakalische als auch die Harnstofflösung einen stöchiometrischen Überschuss bezüglich der eingesetzten Zirkoniumsalze aufweisen.

3. Verfahren nach den Ansprüchen 1 und 2, dadurch gekennzeichnet, dass als Zirkoniumsalz durch Umkristallisieren gereinigtes saures Sulfat, $Zr(SO_4)_2 \cdot 4H_2O$, eingesetzt wird.

4. Verfahren nach den Ansprüchen 1 und 2, dadurch gekennzeichnet, dass als Zirkoniumsalz gereinigtes Zirkoniumoxichlorid, $ZrOCl_2 \cdot 8H_2O$, eingesetzt wird.

**Patentansprüche**

1. Verfahren zur Herstellung eines säurelöslichen und zu einem reinen hochdispersen Zirkoniumoxid kalzinierbaren basischen Zirkoniumkarbonats aus reinen Zirkoniumsalzen durch Umsetzung der festen Salze mit ammoniakalischer Lösung, Abtrennung der erhaltenen basischen Zirkoniumsalze und Überführung in das basische Zirkoniumkarbonat, dadurch gekennzeichnet, dass die

**Claims**

1. Process for the preparation of an acid soluble and basic zirconium carbonate calcinable to a pure highly dispersed zirconium oxide from pure zirconium salts by reaction of the solid salts with ammonium hydroxide solution, separation of the basic zirconium salts obtained and conversion to the basic zirconium carbonate, characterised in that the carbonization is carried out in a urea solution undergoing hydrolytic decomposition thereof.

2. Process according to Claim 1, characterised in that both the ammonium hydroxide and also the urea solution possess a stoichiometric excess related to the zirconium salts employed.

3. Process according to Claims 1 and 2, characterised in that acid sulphate $Zr(SO_4)_2 \cdot 4H_2O$ purified by recrystallisation is employed as zirconium salt.

4. Process according to Claims 1 and 2, characterised in that purified zirconium oxychloride, $ZrOCl_2 \cdot 8H_2O$, is employed as zirconium salt.

## Revendications

1. Procédé de préparation d'un carbonate basique de zirconium soluble dans les acides et pouvant être calciné pour donner un oxyde de zirconium pur de degré de dispersion élevé à partir de sels de zirconium purs par réaction des sels solides avec une solution ammoniacale, séparation des sels basiques de zirconium obtenus et conversion en carbonate basique de zirconium, caractérisé en ce que la carbonatation est réalisée dans une solution d'urée avec décomposition hydrolytique de celle-ci.

2. Procédé selon la revendication 1, caractérisé en ce que la solution ammoniacale aussi bien que la solution d'urée présentent un excès stœchiométrique par rapport à la quantité de sels de zirconium employée.

3. Procédé selon les revendications 1 et 2, caractérisé en ce que l'on emploie, comme sel de zirconium, du sulfate acide $Zr(SO_3)_2 \cdot 4H_2O$ purifié par recristallisation.

4. Procédé selon les revendications 1 et 2, caractérisé en ce que l'on emploie, comme sel de zirconium, de l'oxychlorure de zirconium $ZrOCl_2 \cdot 8H_2O$.